## Europäisches Patentamt

## European Patent Office

## Office européen des brevets

(11) Veröffentlichungsnummer: **0 177 779**
**B1**

(12) **EUROPÄISCHE PATENTSCHRIFT**

(45) Veröffentlichungstag der Patentschrift:
15.03.89

(51) Int. Cl.⁴: **H04B 3/44**, H04B 3/46

(21) Anmeldenummer: **85111380.3**

(22) Anmeldetag: **09.09.85**

(54) Schaltungsanordnung mit einer Speiseschaltung zur Speisung eines Lastwiderstandes.

(30) Priorität: **10.09.84 DE 3433142**

(43) Veröffentlichungstag der Anmeldung:
**16.04.86 Patentblatt 86/16**

(45) Bekanntmachung des Hinweises auf die Patenterteilung:
**15.03.89 Patentblatt 89/11**

(84) Benannte Vertragsstaaten:
**AT BE CH DE FR GB IT LI NL SE**

(56) Entgegenhaltungen:
**DE-A- 3 216 497**

(73) Patentinhaber: **Siemens Aktiengesellschaft Berlin und München, Wittelsbacherplatz 2, D-8000 München 2(DE)**

(72) Erfinder: **Kraicar, Heinz, Dipl.-Ing., Lindenberg 60 A, D-8134 Pöcking(DE)**

ACTORUM AG

## Beschschreibung

Die Erfindung bezieht sich auf eine Schaltungsanordnung mit einer Speiseschaltung zur Speisung eines Lastwiderstandes, wobei die Speiseschaltung über einen durch eine Steuervorrichtung steuerbaren elektronischen Schalter an ein Anschlußpaar zum Anschluß eines Laststromkreises geführt ist und wobei der elektronische Schalter in einem der von der Speiseschaltung zum Anschlußpaar führenden Speisestrompfade die gesteuerte Strecke eines ersten Transistors enthält und ein Steueranschluß des ersten Transistors an ein derartiges Steuerpotential geführt ist, daß der erste Transistor bei aktivierter Speiseschaltung leitend und bei deaktivierter Speiseschaltung gesperrt ist und wobei parallel zur gesteuerten Strecke des ersten Transistors die Anoden-Kathoden-Strecke eines Thyristors angeordnet ist und die Steuerelektrode des Thyristors derart über einen ersten Widerstand an die eine und über einen bei Spannungen unterhalb einer Schwellenspannung gesperrten und bei Spannungen oberhalb einer Schwellenspannung leitenden, nichtlinearen Zweipol nach Art einer Z-Diode an die andere Hauptelektrode des Thyristors geführt ist, daß der erste Widerstand parallel zur Steuerstrecke des Thyristors liegt. Dabei kann der Lastwiderstand aus einem oder mehreren Teilwiderständen bestehen. Der erste Transistor kann ein Feldeffekttransistor oder ein bipolarer Transistor sein.

Eine derartige Schaltungsanordnung wurde bereits in der Patentanmeldung mit dem Aktenzeichen P 3 425 536.2 vorgeschlagen.

Die bereits vorgeschlagene Schaltungsanordnung enthält zwei mit einander entgegengesetzter Polung an einen Verbraucher anschließbare Speiseschaltungen und hat eine Vorrichtung zur wahlweisen Speisung des Lastwiderstandes mittels der einen oder der anderen Speiseschaltung. Der Ausgang der einen Speiseschaltung ist über eine Schaltvorrichtung, die einen selbsttätig ein- und ausschaltbaren, mit einem Transistor und einem Thyristor aufgebauten elektronischen Schalter enthält, an den Lastwiderstand geführt.

Der elektronische Schalter hat die Eigenschaft, daß er bei aktivierter Speiseschaltung durchlässig und bei deaktivierter Speiseschaltung gesperrt ist. Da die mit der Schaltvorrichtung versehene Speiseschaltung und die weitere Speiseschaltung mit entgegengesetzt gepolter Ausgangsspannung abwechselnd aktiviert oder deaktiviert werden, verhindert der elektronische Schalter, daß der Ausgang einer deaktivierten Speiseschaltung den Ausgang einer aktivierten Speiseschaltung belastet. Dies ist insbesondere bei Speiseschaltungen von Bedeutung, bei denen am Ausgang eine Diode wirksam ist, die für die Ausgangsspannung der Speiseschaltung gesperrt, für die Ausgangsspannung der anderen Speiseschaltung dagegen in Durchlaßrichtung gepolt ist und daher für die andere Speiseschaltung praktisch einen Kurzschluß der Ausgangsspannung bedeuten würde. Eine derartige am Ausgang wirksame Diode kann insbesondere Bestandteil einer Gleichrichterschaltung eines Umrichters oder Gleichrichters oder eine zum Schutz der Speiseschaltung zusätzlich angebrachte Diode sein.

Steuert man die Schaltvorrichtung in Abhängigkeit von der Ausgangsspannung der zugeordneten Speiseschaltung, so können sich dann Schwierigkeiten ergeben, wenn Betriebszustände möglich sind, bei denen die Speiseschaltung eine nur sehr geringe Ausgangsspannung abgibt, die den Transistor des elektronischen Schalters nicht voll durchsteuert.

Eine Schaltungsanordnung mit zwei Speiseschaltungen, die mit einander entgegengesetzter Polung an einen Lastwiderstand anschließbar sind, ist bereits aus der DE-OS 3 216 497 bekannt. Bei der bekannten Schaltungsanordnung besteht die eine Speiseschaltung aus einer Konstantstromquelle. Durch Anschalten eines Spannungsbegrenzers an die Konstantstromquelle erhält man die weitere Speiseschaltung. Im Hinblick auf einen Personenschutz in der Ortungsstellung wird eine Reduktion der Gerätespannung auf z.B. maximal 60 V vorgenommen.

Die beiden Speiseschaltungen sind über ein gemeinsames Paar von Speisestrompfaden an einen Umschalter geführt, der den Lastwiderstand wahlweise mit der einen oder mit der anderen Polarität an die beiden Speisestrompfade anschließt. Als Umschalter dient ein Relais, das eine selbsttätige Fehlerortung ermöglicht und entsprechend angesteuert wird.

Der Lastwiderstand ist eine Fernspeiseschleife, die mehrere in Serie geschaltete Verbraucher mit konstantem Gleichstrom speist. Die Fernspeiseschleife ist mit Querzweigen versehen, die jeweils eine für die Fernspeisespannung in Sperrichtung gepolte Diode und einen dazu in Serie angeordneten Widerstand enthält. Legt man die entgegengesetzt zur Fernspeisespannung gepolte Prüfspannung an den Eingang der Fernspeiseschleife, und ist die Fernspeiseschleife an irgendeiner Stelle unterbrochen, so fließt in allen vor der Unterbrechungsstelle liegenden Querzweigen ein Strom. Der Summenstrom wird in der Speisestelle gemessen. Jedem Meßwert ist ein unterbrochenes Verstärkerfeld zugeordnet.

Das Fernspeisegerät wird von Konstantstrom auf Konstantspannung umgeschaltet. Dies wird umso schwieriger, je größer die Fernspeiseleistung im Verhältnis zur Ortungsleistung ist. Außerdem wird die Umpolung bei Serienbetrieb von Fernspeisegeräten vergleichsweise kompliziert.

Eine andere Möglichkeit zur wahlweisen Speisung eines elektrischen Verbrauchers mit Spannungen verschiedener Polarität besteht in einer Verwendung mechanischer Kontakte mit Handbetätigung.

Weiterhin ist es aus W.S. Jahn: "Elektrisch Fernüberwachen und Fernbedienen", 1962, Richard Pflaum Verlag München, Seite 218 bereits bekannt, bei der elektrischen Fernsteuerung elektrische Leitungen dadurch mehrfach auszunutzen, daß Fernsteuersignale unterschiedlicher Polarität Verwendung finden.

Aufgabe der Erfindung ist es, eine Schaltungsanordnung der eingangs genannten Art derart auszubilden, daß die Speiseschaltung an ihrem Ausgang gegen Fremdspannungen entgegengesetzter Polarität sicher geschützt ist und daß der im elektronischen Schalter enthaltene Transistor auch bei kleinen Ausgangsspannungen wenigstens näherungsweise voll durchgesteuert wird.

Gemäß der Erfindung wird die Schaltungsanordnung zur Lösung dieser Aufgabe derart ausgebildet, daß die Steuervorrichtung einen im Laststromkreis der Speiseschaltung in Serie zur gesteuerten Strecke des ersten Transistors angeordneten zweiten Widerstand und einen mit seiner Steuerstrecke an den zweiten Widerstand angeschlossenen zweiten Transistor enthält, und daß der Steueranschluß des ersten Transistors über die gesteuerte Strecke des zweiten Transistors an den dem ersten Transistor abgewandten Anschluß des zweiten Widerstandes geführt ist.

In diesem Zusammenhang ist unter einer gesteuerten Strecke eines Transistors eine Source-Drain- oder Emitter-Kollektor-Strecke und unter einer Steuerstrecke eines Transistors eine Gate-Source- oder Basis-Emitter- Strecke zu verstehen.

Dabei kann der zweite Transistor ein bipolarer Transistor oder ein Feldeffekttransistor sein.

Wird die mit der Schaltvorrichtung versehene Speiseschaltung aktiviert, so führt zunächst der Thyristor des Halbleiterschalters Strom und zwar solange, bis der Transistor den Strom übernimmt. Dabei ergibt sich der Vorteil, daß der im Halbleiterschalter enthaltene Transistor auch in dem Betriebszustand, in dem die Speiseschaltung bei sehr niedriger Ausgangsspannung einen großen Strom abgibt, keine unzulässig große Verlustleistung entwickelt.

Ist in weiterer Ausgestaltung der Erfindung die Speiseschaltung eine Konstantstromquelle, so kann diese in vorteilhafter Weise ohne weiteres mit einem niederohmigen Lastwiderstand oder sogar mit einem Kurzschlußkreis abgeschlossen werden, ohne daß für den elektronischen Schalter die Gefahr einer Überlastung entsteht.

Ist in weiterer Ausgestaltung der Erfindung im Lastkreis der Konstantstromquelle eine weitere Konstantstromquelle angeordnet, so ergibt sich der besondere Vorteil, daß die Sollwerte der Konstantstromquellen nicht exakt übereinzustimmen brauchen, um eine sichere Funktion der aus elektronischem Schalter und Steuervorrichtung bestehenden Schaltvorrichtung sicherzustellen. Hat die mit der Schaltvorrichtung versehene Konstantstromquelle einen etwas niedrigeren Sollwert des Ausgangsstromes als die weitere Konstantstromquelle bzw. die weiteren Konstantstromquellen, so gibt sie eine sehr geringe Ausgangsspannung ab und dies in vorteilhafter Weise ohne die sichere Funktion der Schaltvorrichtung zu beeinträchtigen.

Zweckmäßigerweise ist dem Steueranschluß des zweiten Transistors ein dritter Widerstand vorgeschaltet. In Weiterbildung der Erfindung wird die Schaltungsanordnung derart ausgebildet, daß parallel zur Steuerstrecke des ersten Transistors ein Widerstand und/oder eine Z-Diode angeordnet ist und daß zwischen der gesteuerten Strecke des zweiten Transistors und dem zweiten Widerstand ein vierter Widerstand angeordnet ist. Dabei ist - insbesondere bei Anordnung einer Z-Diode parallel zur Steuerstrecke des ersten Transistors - sicher vermieden, daß bei einem Kurzschluß am Ausgang der Speiseschaltung ein zu großer Teil des Ausgangsstromes über die gesteuerte Strecke des zweiten Transistors fließen kann.

Ein weiterer Schutz für den zweiten Transistor läßt sich mit einfachen Mitteln dadurch erzielen, daß parallel zu der aus der gesteuerten Strecke des ersten Transistors, dem zweiten Widerstand und dem vierten Widerstand bestehenden Serienschaltung eine für den Ausgangsstrom der zugeordneten Speiseschaltung in Sperrichtung gepolte Z-Diode angeordnet ist.

Besonders vorteilhaft ist eine Verwendung der Schaltungsanordnung in einer Anordnung mit zwei mit einander entgegengesetzter Polung an einen Verbraucher anschließbaren Speiseschaltungen und mit einem jeweils über Speisestrompfade an die Speiseschaltungen angeschlossenen Anschlußpaar für den elektrischen Lastwiderstand und mit einer Vorrichtung zur wahlweisen Speisung des Lastwiderstandes mittels der einen oder der anderen Speiseschaltung, wobei wenigstens bei der mit dem elektronischen Schalter und der Steuervorrichtung versehenen Speiseschaltung zu deren Aktivierung vorgesehene Schaltmittel außerhalb des Ausgangskreises angeordnet sind.

Zweckmäßigerweise ist dabei die eine Speiseschaltung eine Fernspeisestromquelle zur Fernspeisung von in einer Fernspeiseschleife liegenden elektrischen Verbrauchern mittels Gleichstrom-Reihenspeisung und die andere Speiseschaltung eine Prüfspannungsquelle einer Vorrichtung zur Prüfung des Widerstandes der Fernspeiseschleife. Die die Fernspeisestromquelle bildende Speiseschaltung ist mittels außerhalb des Ausgangskreises angeordneter Schaltmittel durch eine Vorrichtung zur Prüfung des Schleifenwiderstandes in Abhängigkeit vom Schleifenwiderstand aktivierbar und/oder deaktivierbar.

Bei einer Verwendung der Schaltungsanordnung in einer Fernspeisevorrichtung mit Fehlerortungs- und/oder Prüfvorrichtung wird als Prüfungsspannungsquelle bzw. Ortungsspannungsquelle zweckmäßigerweise eine eigene Hilfsspannung verwendet, die vorteilhaft durch einen relativ wenig aufwendigen Kleinumrichter erzeugt werden kann. Die Hilfsspannung ist konstant und von vornherein für Personenschutzanforderungen dimensioniert.

Weitere vorteilhafte Ausgestaltungen der Erfindung ergeben sich aus den Unteransprüchen 9 bis 12.

Die Erfindung wird anhand der in den Figuren dargestellten Ausführungsbeispiele näher erläutert.

Es zeigen

Fig. 1 eine Schaltungsanordnung mit zwei Speiseschaltungen zur Speisung eines Lastwiderstandes mit Spannungen entgegengesetzter Polarität,

Fig. 2 eine Fernspeiseschleife mit ferngespeisten Regeneratoren und Dioden-Querzweigen,

Fig. 3 eine Schaltungsanordnung mit zwei Speiseschaltungen, von denen die eine über einen elektronischen und die andere über einen mechanischen Schalter an einen gemeinsamen Lastwiderstand geführt ist,

Fig. 4 einen elektronischen Schalter mit einem in Abhängigkeit vom Laststrom einer Speiseschaltung gesteuerten Feldeffekttransistor,

Fig. 5 eine Schaltungsanordnung, bei der von zwei Speiseschaltungen die eine in einem Fernspeisegerät und die andere in einem Fehlerortungsgerät angeordnet ist,

Fig. 6 eine Schaltungsanordnung, bei der von zwei Speiseschaltungen die eine aus zwei Fernspeisegeräten zusammengesetzt und die andere in einem Fehlerortungsgerät angeordnet ist,

Fig. 7 eine Schaltungsanordnung mit zwei gleichartig ausgebildeten Fernspeisegeräten, die je eine Fernspeisestromquelle und eine Prüfspannungsquelle enthalten und

Fig. 8 eine Speiseschaltung, die als stillsetzbarer Umrichter ausgebildet ist.

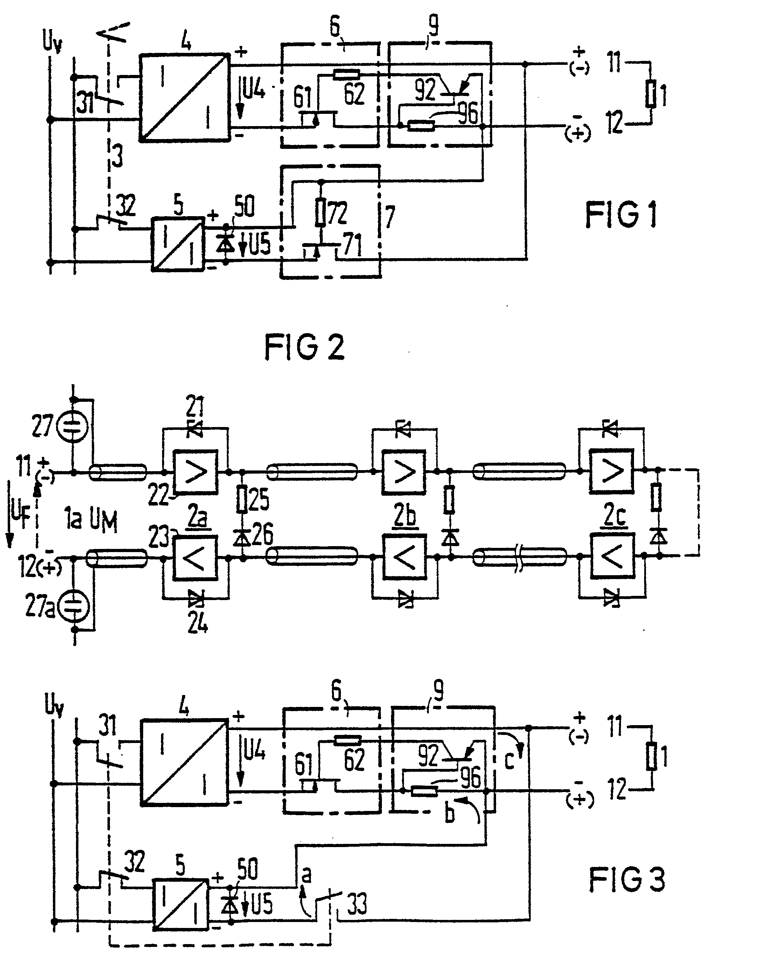

Die in Fig. 1 gezeigte Schaltungsanordnung enthält zwei Speiseschaltungen 4 und 5. Die Speiseschaltung 4 dient als Fernspeisestromquelle und ist über den Schalter 31 an die Versorgungsspannung $U_V$ angeschlossen. Die Speiseschaltung 5 dient als Prüfspannungsquelle und ist über den Schalter 32 mit der Versorgungsspannung $U_V$ verbunden. Die Schalter 31 und 32 werden derart gemeinsam betätigt, daß jeweils der eine geöffnet und der andere gesperrt ist.

Die Speiseschaltung 4 gibt am Ausgang die positive Spannung $U_4$ ab. Am Ausgang der Speiseschaltung 5 ist die für die Ausgangsspannung $U_5$ in Sperrrichtung gepolte Diode 50 wirksam.

Die Ausgänge der Speiseschaltungen 4 und 5 sind über je einen elektronischen Schalter 6 bzw. 7 an den gemeinsamen Lastwiderstand 1 geführt.

Von dem Ausgang der Speiseschaltung 4 sind der Pluspol unmittelbar an den Anschluß 11 des Lastwiderstandes 1 und der Minuspol über die Source-Drain-Strecke des Leistungs-Feldeffekttransistors 61 und den dazu in Serie geschalteten Widerstand 96 an den Anschluß 12 des Lastwiderstandes 1 geführt. Die Steuerelektrode des Feldeffekttransistors 61 ist über die Kollektor-Emitterstrecke des bipolaren Transistors 92 an den Pluspol des Ausgangs der Speiseschaltung 5 geführt.

Der elektronische Schalter 7 ist als spannungsgesteuerter Transistorschalter ausgebildet. Die Source-Drain-Strecke des Leistungs-Feldeffekttransistors 71 ist in den Strompfad eingefügt, der vom Minuspol der Speiseschaltung 5 zum Anschluß 11 des Lastwiderstandes 1 führt. Die Steuerelektrode des Feldeffekttransistors 71 ist über den Widerstand 72 an den Pluspol des Ausgangs der Speiseschaltung 5 geführt.

Bei der Schaltungsanordnung nach Fig. 1 sind die Feldeffekttransistoren 61 und 71 vom n-Typ und jeweils in die Minusleitung der betreffenden Speiseschaltung eingefügt. Verwendet man einen Feldeffekttransistor vom p-Typ, so ist die Source-Drain-Strecke in die Plusleitung einzufügen, derart, daß die Source-Elektrode mit dem Pluspol des Ausgangs der Speiseschaltung 4 bzw. 5 verbunden ist.

Bei dem abgewandelten elektronischen Schalter 6 ist als bipolarer Transistor ein solcher vom Typ npn zu verwenden. Bei dem abgewandelten elektronischen Schalter 7 ist der Gate-Vorwiderstand an die Minusleitung der betreffenden Speiseschaltung anzuschließen.

In Anwendung der Schaltungsanordnung nach Fig. 1 kann gegebenenfalls anstelle des Feldeffekttransistors 61 ein bipolarer Transistor und/oder anstelle des bipolaren Transistors 92 ein Feldeffekttransistor treten.

Ferner kann der elektronische Schalter 7 durch einen elektronischen Schalter nach Art des elektronischen Schalters 6 ersetzt werden.

Fig. 2 zeigt eine Schaltungsanordnung zur Ortung einer Unterbrechungsstelle einer Fernspeiseschleife für reihengespeiste, durch Z-Dioden 21, 24 überbrückte Regeneratoren 22 und 23. Um eine Unterbrechungsstelle der Fernspeiseschleife orten zu können, ist die Fernspeiseschleife in den Zwischenstellen 2a, 2b und 2c mit Querzweigen versehen, die jeweils eine Diode 26 und einen dazu in Serie angeordneten Widerstand 25 enthalten. Die Dioden 26 sind bei Fernspeisebetrieb gesperrt. Die Fehlerortung erfolgt durch Speisung der Fernspeiseschleife mit einer Spannung mit umgekehrter Polung.

Bei der in Fig. 2 gezeigten Fernspeiseschleife 1a ist im Normalbetrieb die Polung ohne Klammern wirksam. Bei Unterbrechung der Fernspeisestrecke wird die umgekehrte Polung, die in Klammern angegeben ist, eingeschaltet. In diesem Schaltzustand kann mit einer Strom-Spannungsmessung der Streckenwiderstand, der aus den bis zur Unterbrechungsstelle parallel geschalteten Widerständen 25 besteht, ermittelt und damit das unterbrochene Verstärkerfeld bestimmt werden.

Die in Fig. 1 gezeigte Schaltungsanordnung ermöglicht es, wahlweise die Fernspeisespannung $U_F$ oder die Ortungsspannung $U_M$ an die Fernspeiseschleife 1a über einen elektronischen Schalter 6 anzuschalten, der ohne fremde Ansteuerung selbsttätig bei Fernspeisebetrieb leitend wird und bei Ortung sperrt.

Wenn z.B. Kontakt 31 geöffnet und Kontakt 32 geschlossen ist, dann ist nur die durch einen Hilfsumrichter gebildete Speiseschaltung 5 in Betrieb. Sie erzeugt z.B. 40 V und steuert den Feldeffekttransistor 71 derart an, daß er durchlässig wird. Der Feldeffekttransistor 61 wird nicht angesteuert, da der Strom an der als Hauptumrichter ausgebildeten Speiseschaltung 4 "Null" ist. Am Fernspeiseausgang 11, 12 liegt die Ortungsspannung 40 V mit der Polung (+), (−) an. Diese Ortungsspannung kann in der Speiseschaltung 4 keinen Strom einspeisen, da der Feldeffekttransistor 61 sperrt.

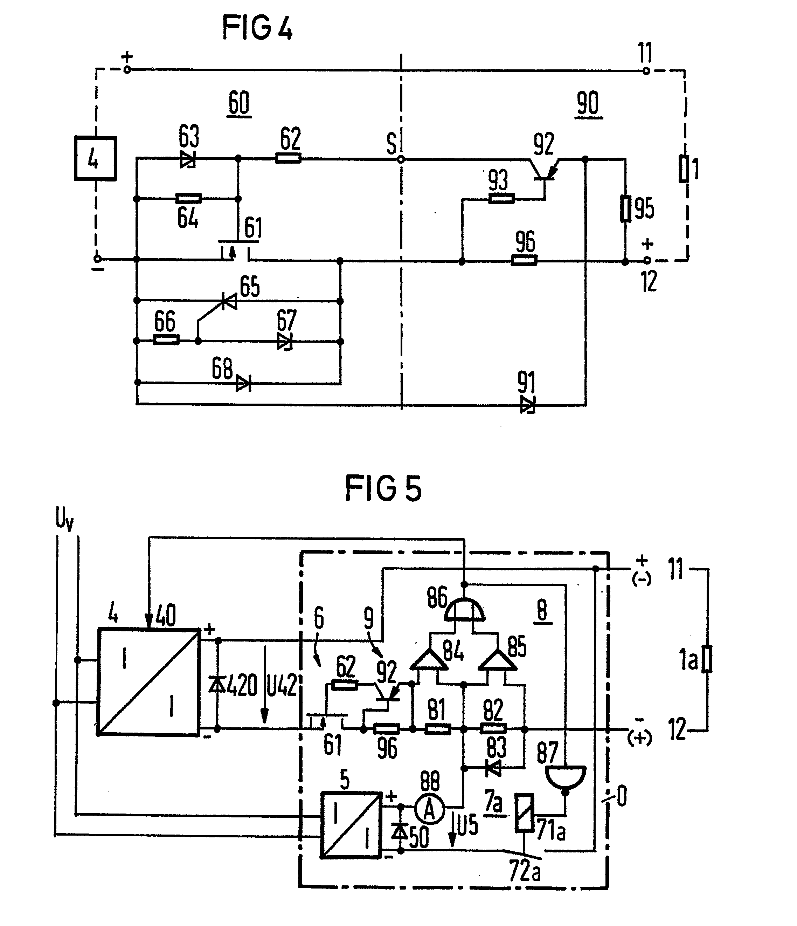

Zweckmässigerweise ist parallel zum Feldeffekttransistor 61 entsprechend Fig. 4 ein Thyristor parallel geschaltet. Wenn man den Kontakt 31 schließt und den Kontakt 32 öffnet, liegt die Fernspeisespannung mit der Polung + − am Fernspeiseausgang 11, 12. Der Feldeffekttransistor 61 ist durchlässig, sobald der Fernspeisestrom fließt und der Feldeffekttransistor 71 sperrt.

Man kann so durch wechselweises Aus- und Einschalten der Speiseschaltung 4 oder 5 am Fernspeiseausgang 11, 12 entweder die Fernspeisespannung mit Konstantstrom oder die entgegengesetzt gepolte konstante Ortungsspannung erhalten.

Der Feldffektransistor 71 muß bei Betrieb der Speiseschaltung 4 die gesamte Fernspeisespannung sperren und eventuelle Beeinflussungs- und Blitzspannungen aushalten. In Anwendungsfällen, bei denen mit besonders großen Überspannungen zu rechnen ist, wird entsprechend Fig. 3 anstelle des Feldeffekttransistors 71 in Fig. 1 zweckmäßigerweise ein Relais verwendet. Ein wesentlicher Vorteil dieser Anordnung, daß der Hauptstromkreis nicht über einen mechanischen Kontakt geführt ist, bleibt dabei erhalten.

Die in Fig. 3 gezeigte Schaltungsanordnung stimmt mit der in Fig. 1 weitgehend überein. Die einzige Abweichung besteht darin, daß der elektronische Schalter 7 nach Fig. 1 durch den mechanischen Kontakt 33 ersetzt ist. Der Kontakt 33 wird immer dann geschlossen, wenn die Speiseschaltung 5 aktiviert wird. Dies kann z.B. dadurch erreicht werden, daß die Wicklung eines Relais an den Eingang der Speiseschaltung 5 angeschlossen ist und der Kontakt 33 zu diesem Relais gehört.

Der elektronische Schalter 6 kann in vorteilhafter Weise als solcher beibehalten werden, weil an seine Sperrfähigkeit keine hohen Ansprüche gestellt werden. Er muß lediglich die vergleichsweise niedrige Ortungsspannung und die durch den Überspannungsableiter 27 bzw. 27a im Ortungskreis vorgegebenen Beeinflussungsspannungen sicher sperren können. Der mechanische Kontakt 33 im Ortungskreis kann eher in Kauf genommen werden, da er nur im Störungsfall benötigt wird.

Die Schaltungsanordnung nach Fig. 3 ist auch unempfindlich gegen die Überlappung der beiden Ausgangsspannungen der Speiseschaltungen 4 und 5. Sind z.B. die Kontakte 32 bzw. 33 geschlossen und wird Kontakt 31 auch geschlossen, dann wird der Feldeffekttransistor 61 durchlässig. Der konstante Fernspeisestrom I_F fließt nun den Pfeilen a, b, c nach und fließt durch die Diode 50. Für den Ortungsumrichter 5 bedeutet dies einen Kurzschluß am Ausgang. Der Ortungsumrichter 5 muß also in diesem Fall kurzschlußfest sein, wenn betrieblich Überlappungen der Haupt- und Ortungsspannung möglich sind.

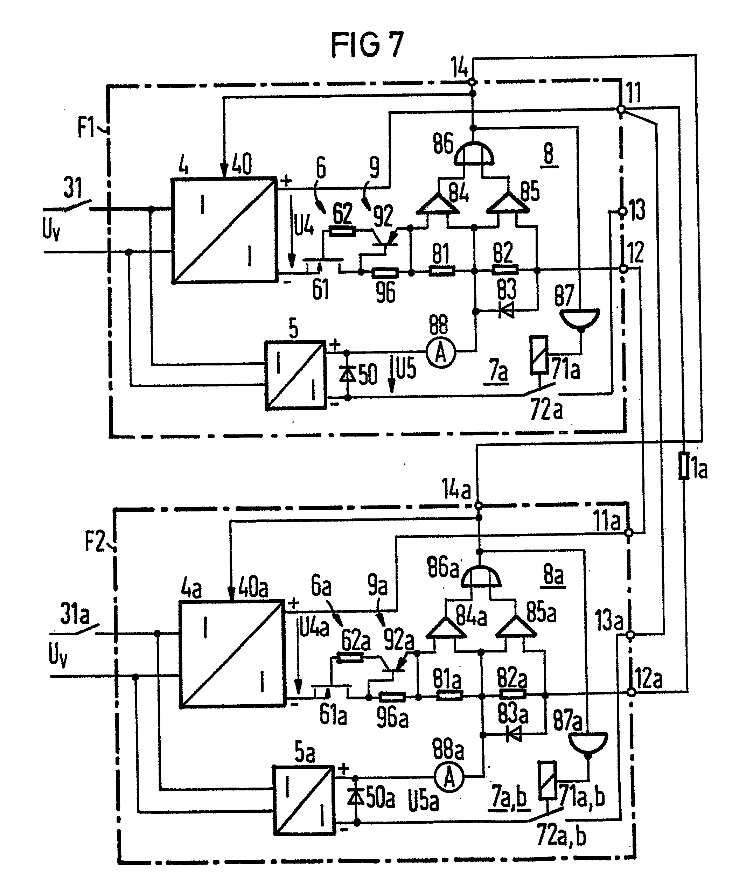

Fig. 4 zeigt eine Schaltvorrichtung mit elektronischem Schalter 60 und mit Steuervorrichtung 90, die vorteilhaft als elektronische Schalter 6 und Steuervorrichtung 9 (Fig. 1, 3, 5, 6, 7) oder elektronischer Schalter 6a und Steuervorrichtung 9a (Fig. 7) Verwendung findet. Der elektronische Schalter 60 wird durch die Steuervorrichtung 90 in Abhängigkeit vom Laststrom der zugeordneten Speiseschaltung gesteuert. Der elektronische Schalter 60 und die Steuervorrichtung 90 bilden eine selbsttätig arbeitende Schaltvorrichtung, die die Speiseschaltung 4 selbsttätig mit dem Lastwiderstand 1 verbindet oder von dem Lastwiderstand trennt.

In dem vom Minuspol der Speiseschaltung 4 zum Lastwiderstand 1 führenden Strompfad ist die Source-Drain-Strecke des Feldeffekttransistors 61 angeordnet. Der Feldeffekttransistor 61 ist mit seiner Steuerelektrode über den Widerstand 62 an den Steueranschluß S geführt. Parallel zur Gate-Source-Strecke liegen der Widerstand 64 und die Z-Diode 63, die für die an die Steuerstrecke des Feldeffekttransistors anzulegende Spannung in Sperrichtung gepolt ist.

Parallel zur Source-Drain-Strecke des Feldeffekttransistors 61 liegt der Thyristor 65. Der Thyristor 65 ist mit seiner Anode an die Drain-Elektrode des Feldeffekttransistors 61 geführt, d.h. er ist - bezogen auf den Strom, der von der Speiseschaltung 4 abgegeben wird - in Durchlaßrichtung gepolt. Die Steuerelektrode des Thyristors 65 ist über den Widerstand 66 an die Kathode und über die Z-Diode 67 an die Anode des Thyristors 65 geführt. Die Z-Diode 67 liegt mit ihrer Kathode an der Anode des Thyristors 65, so daß sie für Ströme, die von der Speiseschaltung 4 stammen, in Sperrichtung gepolt ist. Die Diode 68 ist mit einer derartigen Polung parallel zur Source-Drain-Strecke des Feldeffekttransistors 61 angeordnet, daß der Thyristor 65 und die Diode 68 antiparallel geschaltet sind.

Die Z-Diode 63 schützt die Gate-Source-Strecke vor zu hohen Spannungen. Der Widerstand 64 ist ein Anpaßwiderstand und der Widerstand 62 ein Ansteuerwiderstand. Diese Widerstände 62 und 64 können in vorteilhafter Weise sehr hochohmig sein, da ein statischer Gate-Strom nicht benötigt wird.

Steuert man die Schaltvorrichtung in Abhängigkeit von der Ausgangsspannung der Speiseschaltung 4, so können sich dann Schwierigkeiten ergeben, wenn Betriebszustände möglich sind, bei denen die Speiseschaltung 4 eine nur sehr geringe Ausgangsspannung abgibt, die den elektronischen Schalter 4 nicht voll durchsteuert. Die in Fig. 4 gezeigte Schaltvorrichtung vermeidet diese Schwierigkeiten.

Der elektronische Schalter 60 wird durch die Steuervorrichtung 90 gesteuert. Die Steuervorrichtung 90 enthält den niederohmigen Widerstand 96, der in Serie zur Source-Drain-Strecke des Feldeffekttransistors 61 in den vom Minuspol der zugeordneten Speiseschaltung zum Lastwiderstand 1 führenden Strompfad eingefügt ist. Der Verbindungspunkt von Feldeffekttransistor 61 und Widerstand 96 ist über den Widerstand 93 an die Basis des bipolaren Transistors 94 geführt. Der dem Feldeffekttransistor 61 abgewandte Anschluß des Widerstandes 96 ist über den Widerstand 95 an den Emitter des Transistors 92 geführt. Der Kollektor des Transistors 92 ist mit dem Steueranschluß S des elektronischen Schalters 60 verbunden. Außerdem ist der Emitter des Transistors 92 über die für den Speisestrom in Sperrichtung gepolte Z-Diode 91 an die Source des Feldeffekttransistors 61 geführt.

Die Speiseschaltung 4 ist eine Quelle eingeprägten Stromes. Die Ansteuerung des Feldeffekttransistors 61 erfolgt in Abhängigkeit von diesem eingeprägten Strom.

Der Feldeffekttransistor 61 ist durch den Thyristor 65 ergänzt, der vorzugsweise ein Kleinthyristor ist. Wird der elektronische Schalter 60 am Steueranschluß S nicht angesteuert und baut sich von der Drain- in Richtung zur Source-Elektrode eine Spannung auf, so verhält sich die Anordnung wie eine Vierschichtdiode. Wird die Zenerspannung der Z-Diode 67 überschritten, so zündet der Thyristor 65. Der Strom im Thyristor 65 wird vom Feldeffekttransistor 61 übernommen, sobald man das Gate ansteuert. Die Übernahme des Stromes erfolgt vollständig, da die Durchlaßspannung des Feldeffekttransistors 61 nur einen Bruchteil derjenigen des Thyristors 65 beträgt. Wird daran anschließend die Ansteuerung vom Steueranschluß S wieder weggenommen, so sperrt die Anordnung wieder, da der Thyristor 65 stromlos war.

Legt man an die aus der Source-Drain-Strecke des Feldeffekttransistros 61 und dem Widerstand 96 bestehende Serienschaltung eine ansteigende Spannung so an, daß der äußere Anschluß des Widerstandes 96 auf positivem und die Source des Feldeffekttransistors 61 auf negativem Potential liegt, dann fließt bis zu einem bestimmten Wert dieser Spannung kein Strom. Erst bei Überschreiten dieses bestimmten Spannungswertes wird der elektronische Schalter niederohmig und es kann Strom über den Thyristor 65 des elektronischen Schalters 60 fließen. Ist die Speiseschaltung 4 eine Quelle eines konstanten eingeprägten Stromes, dann entsteht am Widerstand 96 ein Spannungsabfall, durch den im Transistor 92 ein durch den Widerstand 93 bestimmter Basisstrom fließt. Dadurch wird der Transistor 92 leitend und der Steueranschluß S nimmt annähernd das Potential des Anschlusses 12 an. Dadurch wird der MOS-FET-Transistor 61 leitend und übernimmt den Strom des parallel geschalteten Thyristors. Dies ermöglicht ein sicheres Sperren des elektronischen Schalters im Falle einer Umschaltung von der Speiseschaltung 4 auf eine weitere Speiseschaltung, z.B. auf die Speiseschaltung 5 nach Fig. 1 oder 3.

Da das Gate G des Feldeffekttransistors 61 mit der Source über die Z-Diode 63 verbunden ist, würde bei sehr großen Strömen durch den Widerstand 96, wie sie z.B. bei einem Kurzschluß am Ausgang eines Fernspeisegerätes auftreten, ein Teil dieser Ströme durch den Transistor 92 fließen und diesen zerstören. Der Schutzwiderstand 95, der wesentlich hochohmiger ist als der Widerstand 96, stellt sicher, daß selbst im genannten Falle keine schädlichen Ströme über den Transistor 92 fließen können. Einen weiteren Schutz für den Transistor 92 stellt die Z-Diode 91 dar. Sie übernimmt als Bypass einen Teil der hohen Ströme. Verwendet man die Schaltvorrichtung in einer Schaltungsvorrichtung nach Fig. 1 oder 3, so ist die Zenerspannung der Z-Diode 91 zweckmäßigerweise größer bemessen als die Ausgangsspannung der Speiseschaltung 5, da sonst bei aktivierter Speiseschaltung 5 Leckströme über den Ausgang der nicht aktivierten Speiseschaltung 4 fließen können, die die Speiseschaltung 5 belasten.

Bei der in Fig. 4 gezeigten Schaltungsanordnung ist der Feldeffekttransistor 61 vom n-Typ und liegt in der Minusleitung. Ordnet man einen Feldeffekttransistor vom p-Typ zusammen mit dem zweiten Widerstand in der Plusleitung an, so ist der Gate-Vorwiderstand 62 an einen npn-Transistor anzuschließen. Außerdem müssen dann die Source-Elektrode und die Anode des entsprechenden Thyristors an den Pluspol der zugeordneten Speiseschaltung angeschlossen werden.

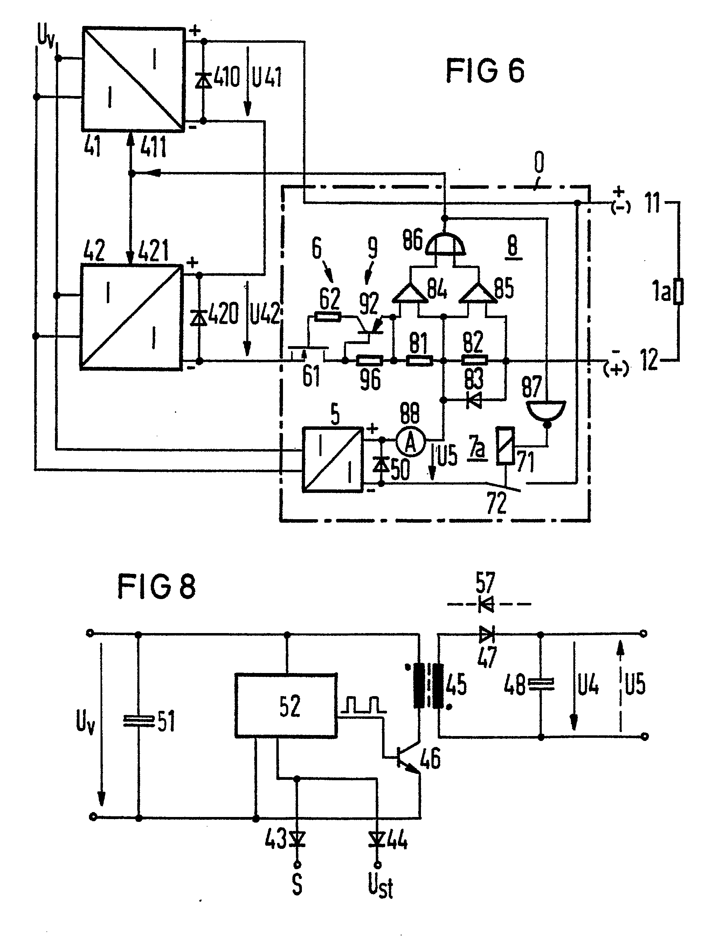

Die in Figur 5 gezeigte Schaltungsanordnung setzt sich aus zwei Baueinheiten, nämlich der als Fernspeisestromquelle dienenden Speiseschaltung 4 und der Baueinheit 0 zusammen. Die Baueinheit 0 enthält die Speiseschaltung 5, an deren Ausgang die für die Ausgangsspannung in Sperrichtung gepolte Diode 50 wirksam ist. Der Pluspol der Speiseschaltung 5 ist über den Strommesser 88 und den Widerstand 82 an den Anschluß 12 der Fernspeiseschleife 1a geführt. Die Drain-Elektrode des Feldeffekttransistors 61 ist über den Widerstand 96, den Widerstand 81 und den dazu in Serie liegenden Widerstand 82 an den Anschluß 12 der Fernspeiseschleife 1a geführt. Parallel zum Widerstand 82 liegt die für den Fernspeisestrom in Durchlaßrichtung gepolte Diode 83. An den Widerstand 81 ist der Komparator 84, an den Widerstand 82 der Komparator 85 angeschlossen. Die Ausgänge der Komparatoren 84 und 85 sind über das ODER-Glied 86 an den Steuereingang 40 der Speiseschaltung 4 geführt. Außerdem ist das Relais 71a über den Inverter 87 an den Ausgang des Oder-Gliedes 86 angeschlossen.

Wenn der Meßwiderstand 82 von genügend Strom durchflossen ist, wird über die Komparatoren 84 und 85 und über die ODER-Stufe 86 an den Steuereingang 40 des Fernspeisegerätes 4 ein "Ein"-Befehl und an das Relais 71a ein "Aus"-Befehl zum Öffnen des Kontaktes 72a gegeben.

Wenn die Fernspeisestrecke 1a unterbrochen wird, sind die Meßwiderstände 81 und 82 zunächst stromlos. Dies ergibt über die ODER-Stufe 86 einen "Aus"-Befehl an das Fernspeisegerät 4 und einen "Ein"-Befehl zum Schließen des Kontaktes 72a an das Relais 71a.

Der elektronische Schalter 6, der über die Steuervorrichtung 9 gesteuert wird, verhindert einen Kurzschluß des Ortungsstromes über das Fernspeisegerät 4. Der Ortungsstrom am Strommesser 88 gibt Auskunft über den Zustand der Fernspeisestrecke 1a. Jedem Ortungsstrom ist ein unterbrochenes Streckenfeld zugeordnet. Wenn die Fernspeisestrecke in Ordnung ist, fließt über den Meßwiderstand 82 soviel Storm, daß an das Relais 71a ein "Aus"-Befehl und an das Fernspeisegerät 4 ein "Ein"-Befehl ergeht.

Die Schaltungsanordnung nach Fig. 6 stimmt mit der nach Fig. 5 weitgehend überein. Abweichend von Fig. 5 sind anstelle der Speiseschaltung 4 zwei Speiseschaltungen 41 und 42 vorgesehen, die am Eingang parallel und am Ausgang in Serie zueinander geschaltet sind. Beide Speiseschaltungen 41 und 42 weisen eine an ihrem Ausgang wirksame, für die Ausgangsspannung in Sperrichtung gepolte Diode 410 bzw. 420 auf. Der Ausgang des ODER-Gliedes 86 ist an die Steuereingänge 411 und 421 der Speiseschaltungen 41 und 42 geführt. Die Last ist durch die Fernspeiseschleife 1a gebildet.

Die Schaltungsanordnung besteht aus drei Baueinheiten, nämlich dem Fernspeisegerät 41, dem Fernspeisegerät 42 und der Baueinheit 0, die als zusätzliche, selbständige Ortungseinrichtung zur Prüfung des Schleifenwiderstandes der Fernspeiseschleife 1a dient.

Bei der in Fig. 7 gezeigten Schaltungsanordnung wird die Fernspeiseschleife 1a von zwei in Serie geschalteten Fernspeisestromquellen gespeist. Anders als bei der Schaltungsanordnung nach Fig. 6 finden zwei in gleicher Weise aufgebaute Baueinheiten F1 und F2 Verwendung. Die Baueinheiten F1 und F2 stimmen jeweils mit der Schaltungsanordnung nach Fig. 5 weitgehend überein und sind jeweils ein Fernspeisegerät mit eingebauter eigener Ortungsschaltung. Die einzige Abweichung besteht darin, daß der Relaiskontakt 72 nicht fest mit dem Anschluß 11 verbunden ist, sondern an einen eigenen Anschluß 13 herausgeführt ist.

Die vorgesehene Verwendung gleichartiger Fernspeisegeräte hat den Vorteil, daß kein eigener Ortungseinsatz gefertigt werden muß. Auch der Forderung nach einer Austauschbarkeit der Fernspeisegeräte kommt die Schaltungsanordnung nach Fig. 7 entgegen.

In Fig. 7 sind für die Baueinheit F2 dieselben Bezugszeichen wie in Fig. 5 verwendet. Für die Baueinheit F2 sind die im übrigen gleichen Bezugszeichen jeweils mit dem Buchstaben a versehen.

Die ausgangsseitige Serienschaltung der beiden Fernspeisegeräte ergibt sich daraus, daß der Anschluß 12 der Baueinheit F1 mit dem Anschluß 11a der Baueinheit F2 verbunden ist. Außerdem ist der Anschluß 11 der Baueinheit F1 mit dem Anschluß 13a der Baueinheit F2 verbunden. Die Ausgänge der ODER-Glieder 86 und 86a sind über die Verbindung der Anschlüsse 14 und 14a miteinander verbunden.

In Fig. 7 ist eine Fernspeiseeinrichtung mit zwei in Reihe geschalteten Fernspeiseeinsätzen F1 und F2, die in gleicher Weise aufgebaut sind und jeweils eine vollständige Ortungseinrichtung enthalten. Wenn die Fernspeisestrecke 1a unterbrochen wird, werden die Meßwiderstände 81 und 81a stromlos und die Fernspeisegeräte F1 und F2 werden ausgeschaltet. Gleichzeitig kommt ein "Ein"-Befehl an die Ortungsrelais 71a und 71ab. Da die Ortungseinrichtung 8 des Gerätes F1 nicht an die Fernspeisestrecke angeschlossen ist, kann sie den Ortungsvorgang des Fernspeisegerätes F2 nicht stören. Der Strommesser 88a gibt Auskunft über den Ort der Streckenunterbrechung. Der Meßwiderstand 82a stellt fest, ob die Fernspeisestrecke 1a in Ordnung ist. Ist dies der Fall, so wird der Relaiskontakt 72ab geöffnet. Außerdem werden die Geräte F1 und F2 gemeinsam eingeschaltet.

Die Verbindung zwischen den Anschlüssen 14 und 14 a kann gegebenenfalls entfallen. Stellt bei dieser Ausführungsform der Meßwiderstand 82a fest, daß die Fernspeisestrecke 1a in Ordnung ist, so schaltet sich zunächst das Gerät F1 nicht ein, da seine Ortung nichts messen kann. Durch das Gerät F1 fließt jedoch schon ein Strom, welcher von dem in Reihe geschalteten Gerät F2 kommt. Der Meßwiderstand 81 registriert nun, ob dieser Strom einen bestimmten Wert überschritten hat. Ist dies der Fall, dann wird auch das Gerät F1 eingeschaltet.

In beiden Fällen erspart man sich aufwendige potentialfreie Querverbindungen zwischen den Fernspeisegeräten, da die Verbindungsleitung 14 - 14a annähernd auf Erdpotential liegt.

Dies kann bei nichtlinearen Verbrauchern von Vorteil sein, insbesondere bei Umrichtern, die eine hohe Anlaufspannung benötigen.

Wird das Gerät F1 über die zusätzliche Verbindungsleitung 14a – 14 im Master-Slave-Verfahren eingeschaltet, so wird im Anschluß an die Prüfung der Fernspeisestrecke in einem einzigen Schritt die volle Fernspeisespannung an die Fernspeisestrecke angelegt.

Der Feldeffekttransistor 61 soll sperren, wenn das Gerät F1 nicht eingeschaltet ist. Gerade dies ist aber der Fall, da sich nach der Ortung immer erst das Gerät F2 einschaltet. Ohne den Thyristor 65 würde der Feldeffekttransistor 6 die gesamte Ausgangsspannung des Gerätes F2 aufnehmen, ohne leitend zu werden und damit die Inbetriebnahme des Gerätes F1 verhindern. Das Gleiche würde passieren, wenn man den Schalter 31, der insbesondere ein Automat ist, einschaltet und den Schalter 31a fälschlicherweise geöffnet läßt.

Die in Fig. 4 gezeigte Schaltvorrichtung hat zunächst das Verhalten einer Vierschichtdiode, so daß die gewünschte Inbetriebnahme des Gerätes F1 möglich ist. Darauf folgt das Verhalten eines Transistors. Dies ist auch nötig, da bei einer Unterbrechung der Fernspeisestrecke 1a vom leitenden Zustand in den sperrenden Zustand übergegangen werden muß.

Der Thyristor 65 ist zugleich ein Schutz für den Feldeffekttransistor 61 gegen Beeinflussungen und Blitzspannungen. Es kann keine höhere Spannung als die Zenerspannung der Z-Diode 67 am Feldeffekttransistor 61 von der Drain- zur Source-Elektrode auftreten. Diese Zenerspannung ist zweckmäßigerweise etwas höher als die Ortungsspannung, so daß bei Ortung die Sperrfähigkeit der Anordnung zu gewährleisten ist. Zum Schutz der Anordnung gegen Überspannungen von der Source- zur Drain-Elektrode ist eine Diode 68 parallel geschaltet. Verwendet man als Thyristor 65 einen solchen, der von der Kathode zur Anode ein Diodenverhalten hat, z.B. einen sogenannten Gate turn off-Thyristor, so übernimmt der Thyristor 65 die Schutzfunktion der Diode 68 und die Diode 68 kann selbst dann entfallen, wenn mit Überspannungen der genannten Art zu rechnen ist. Die Zenerspannung der Z-Diode 91 ist zweckmäßigerweise größer als die geplante Ortungsspannung. Andernfalls fließen bei Beaufschlagung der Fernspeisestrecke 1a mit der Ortungsspannung Leckströme über den inneren Fernspeisekreis, die man allerdings bei ausreichend großen Stromreserven der Ortungsspannungsquelle hinnehmen kann.

Die mechanischen Schalter 31 und 32 auf der 60-V-Seite der Speiseschaltungen können mit geringem Aufwand durch eine Einwirkung auf die Speiseschaltungen, insbesondere auf die Schalttransistoren der als Umrichter ausgebildeten Schaltungsanordnungen ersetzt werden. Ein Beispiel hierfür geht aus Fig. 8 hervor. Ein Umrichter kann entsprechend Fig. 8 dadurch aktiviert bzw. deaktiviert werden, daß die Steuerelektronik, die Einschaltimpulse an den Schalttransistor 46 abgibt, mittels einer Steuerspannung freigegeben oder blockiert wird.

Die Primärwicklung des Übertragers 45 wird mittels des Transistors 46 impulsweise mit dem an Versorgungsspannung $U_V$ liegenden Kondensator 51 verbunden. Zur Ansteuerung des Transistors 46 dient die Steuerelektronik 52, die zwei mittels der Dioden 43 und 44 voneinander entkoppelte Steuereingänge für ein Sperrsignal IL bzw. für eine Steuerspannung $U_{St}$ aufweist. Die Sekundärwicklung des Übertragers 45 ist über die Diode 47 an den Ausgangskondensator 48 geführt. Die Polung der Diode 47 ergibt die positive Ausgangsspannung U4. Ersetzt man die Diode 47 durch die Diode 57, so liegt am Ausgang die entgegengesetzt gepolte Spannung U5.

Die in Fig. 8 gezeigte Speiseschaltung ist in bekannter Weise (Funkschau 1/1983, Seite 68) als Eintakt-Sperrwandler ausgebildet. Während der Impulsdauer ist der Schalttransistor 46 durchlässig. Bei konstanter Periodendauer wird die Impulsdauer und damit die Spannung U4 bzw. U5 durch die Steuerspannung $U_{St}$ verändert. Wird die negative Steuerspannung dem Betrang nach größer, so werden die Impulse immer schmäler und verschwinden schließlich. Die Ausgangsspannung U4 bzw. U5 wird dann "Null". Am Anschluß S für die Impulslöschung kann man ebenfalls durch Anlegen einer geeigneten Spannung, unabhängig von der Steuerspannung $U_{St}$, die Spannung U4 bzw. U5 auf "Null" bringen.

Wenn man in Fig. 8 die Diode 47 durch die Diode 57 ersetzt, bekommt man die Prinzipschaltung eines Durchflußwandlers. Die Ansteuerung der Impulse und die elektronische Geräteabschaltung bleibt im Prinzip erhalten.

### Patentansprüche

1. Schaltungsanordnung mit einer Speiseschaltung zur Speisung eines Lastwiderstandes, wobei die Speiseschaltung über einen durch eine Steuervorrichtung steuerbaren elektronischen Schalter an ein Anschlußpaar (11, 12) zum Anschluß eines Laststromkreises geführt ist und wobei der elektronische Schalter in einem der von der Speiseschaltung zum Anschlußpaar führenden Speisestrompfade die gesteuerte Strecke eines ersten Transistors (61) enthält und ein Steueranschluß des ersten Transistors (61) an ein derartiges Steuerpotential geführt ist, daß der erste Transistor (61) bei aktivierter Speiseschaltung (4) leitend und bei deaktivierter Speiseschaltung (4) gesperrt ist und wobei parallel zur gesteuerten Strecke des ersten Transistors (61) die Anoden-Kathoden-Strecke eines Thyristors (65) angeordnet ist und die Steuerelektrode des Thyristors (65) derart über einen ersten Widerstand (66) an die eine und über einen bei Spannungen unterhalb einer Schwellenspannung gesperrten und bei Spannungen oberhalb einer Schwellenspannung leitenden, nichtlinearen Zweipol (67) nach Art einer Z-Diode an die andere Hauptelektrode des Thyristors (65) geführt ist, daß der erste Widerstand (66) parallel zur Steuerstrecke des Thyristors (65) liegt, dadurch gekennzeichnet, daß die Steuervorrichtung einen im Laststromkreis der Speiseschaltung (4) in Serie zur gesteuerten Strecke des ersten Transistors (61) angeordneten zweiten Widerstand (96) und einen mit seiner Steuerstrecke an den zweiten Widerstand (96) angeschlossenen zweiten Transistor (92) enthält, und daß der Steueranschluß des ersten Transistors (61) über die gesteuerte Strecke des zweiten Transistors an den dem ersten Transistor (61) abgewandten Anschluß des zweiten Widerstandes (96) geführt ist.

2. Schaltungsanordnung nach Anspruch 1, dadurch gekennzeichnet, daß die Speiseschaltung (4) eine Konstantstromquelle ist.

3. Schaltungsanordnung nach Anspruch 2, dadurch gekennzeichnet, daß im Lastkreis der Konstantstromquelle wenigstens eine weitere Konstantstromquelle angeordnet ist.

4. Schaltungsanordnung nach einem der Ansprüche 1 bis 3, dadurch gekennzeichnet, daß dem Steueranschluß des zweiten Transistors (92) ein dritter Widerstand (93) vorgeschaltet ist.

5. Schaltungsanordnung nach einem der Ansprüche 1 bis 4, dadurch gekennzeichnet, daß parallel zur Steuerstrecke des ersten Transistors (61) ein Widerstand (64) und/oder eine Z-Diode (63) angeordnet ist und daß zwischen der gesteuerten Strecke des zweiten Transistors (92) und dem zweiten Widerstand (96) ein vierter Widerstand (95) angeordnet ist.

6. Schaltungsanordnung nach Anspruch 5, dadurch gekennzeichnet, daß parallel zu der aus der gesteuerten Strecke des ersten Transistors (61), dem zweiten Widerstand (96) und dem vierten Widerstand (95) bestehenden Serienschaltung eine für den Ausgangsstrom der zugeordneten Speiseschaltung (4) in Sperrichtung gepolte Z-Diode (91) angeordnet ist.

7. Schaltungsanordnung nach einem der Ansprüche 1 bis 6, gekennzeichnet durch eine Verwendung in einer Anordnung mit zwei mit einander entgegengesetzter Polung an einen Lastwiderstand (1) anschließbaren Speiseschaltungen (4, 5) und mit einem jeweils über Speisestrompfade an die Speiseschaltungen (4, 5) angeschlossenen Anschlußpaar (11, 12) für den Lastwiderstand (1) und mit einer Vorrichtung zur wahlweisen Speisung des Lastwiderstandes (1) mittels der einen oder der anderen Speiseschaltung (4, 5), wobei wenigstens bei der mit dem elektronischen Schalter und der Steuervorrichtung versehenen Speiseschaltung (4) zu deren Aktivierung vorgesehene Schaltmittel (31) außerhalb des Ausgangskreises angeordnet sind.

8. Schaltungsanordnung nach Anspruch 7, dadurch gekennzeichnet, daß die eine Speiseschaltung (4) eine Fernspeisestromquelle zur Fernspeisung von in einer Fernspeiseschleife (1a) liegenden elektrischen Verbrauchern mittels Gleichstrom-Reihenspeisung und die andere Speiseschaltung (5) eine Prüfspannungsquelle einer Vorrichtung (8, 8a) zur Prüfung des Widerstandes der Fernspeiseschleife (1a) ist, und daß die die Fernspeisestromquelle bildende Speiseschaltung (4) mittels außerhalb des Ausgangskreises angeordneter Schaltmittel durch eine Vorrichtung (8, 8a) zur Prüfung des Schleifenwiderstandes in Abhängigkeit vom Schleifenwiderstand aktivierbar und/oder deaktivierbar ist.

9. Schaltungsanordnung nach einem der Ansprüche 1 bis 8, dadurch gekennzeichnet, daß wenigstens eine der Speiseschaltungen (4, 5, 41, 42) eine am Ausgang wirksame Diode (50, 410, 420) enthält, die für die eigene Ausgangsspannung in Sperrichtung gepolt ist.

10. Schaltungsanordnung nach Anspruch 8 oder 9, dadurch gekennzeichnet, daß ein Strommeßwiderstand (82) für den Prüfstrom und ein Strommeßwiderstand (81) für den Fernspeisestrom unmittelbar in Serie geschaltet und derart angeordnet sind, daß der Strommeßwiderstand (82) für den Prüfstrom in einem Stromzweig zwischen der Fernspeiseschleife (1a) und zwei zu den Speiseschaltungen führenden Strompfaden liegt und durch eine für den Fernspeisestrom in Durchlaßrichtung gepolte Diode (83) überbrückt ist und daß der Strommeßwiderstand (81) für den Fernspeisestrom an den Ausgang der die Fernspeisestromquelle bildenden Speiseschaltung (4) angeschlossen ist und daß an die Strommeßwiderstände (81, 82) jeweils ein Komparator (84, 85) angeschlossen ist und daß die Ausgänge der Komparatoren (84, 85) über ein ODER-Glied (86) an einen Steuereingang (40) der die Fernspeisestromquelle bildenden Speiseschaltung (4) geführt sind.

11. Schaltungsanordnung nach einem der Ansprüche 8 bis 10, dadurch gekennzeichnet, daß die die Fernspeisestromquelle und die Prüfspannungsquelle bildenden Speiseschaltungen (4, 5; 4a, 5a) zusammen mit der Vorrichtung (8, 8a) zur Prüfung des Schleifenwiderstandes in ein und derselben Baueinheit (F1, F2) untergebracht sind und daß der Ausgang der die Prüfspannungsquelle bildenden Speiseschaltung (5, 5a), der über den einen Strompfad an einen Strommeßwiderstand (82) geführt ist, über den anderen Strompfad getrennt herausgeführt ist.

12. Schaltungsanordnung nach Anspruch 11, dadurch gekennzeichnet, daß die Baueinheit (F1) mit einer weiteren gleichartigen Baueinheit (F2) an eine Fernspeiseschleife (1a) angeschlossen ist, derart, daß eine Serienschaltung der die Fernspeisestromquellen bildenden Speiseschaltungen am Eingang der Fernspeiseschleife liegt und daß eine der die Prüfspannungsquellen bildenden Speiseschaltungen (4, 4a) mit der Fernspeiseschleife (1a) verbunden ist.

**Claims**

1. Circuit arrangement with a feeding circuit for feeding a load resistor, in which arrangement the feeding circuit is connected via an electronic switch, which can be controlled by a control device, to a connection pair (11, 12) for connecting a load circuit, and in which arrangement the electronic switch contains the controlled path of a first transistor (61) in a feed current path leading from the feeding circuit to the connection pair, and a control connection of the first transistor (61) is connected to such a control potential that the first transistor (61) is conducting when the feeding circuit (4) is activated and is cut-off when the feeding circuit (4) is deactivated and in which arrangement the anode-cathode path of a thyristor (65) is arranged in parallel with the controlled path of the first transistor (61) and the control electrode of the thyristor (65) is connected via a first restistor (66) to one and via a nonlinear two-terminal network (67) in the manner of a Z diode, which is cut-off with voltages below a threshold voltage and is conducting with voltages above a threshold voltage, to the other main electrode of the thyristor (65), in such a manner that the first resistor (66) is connected in parallel with the control path of the thyristor (65), characterized in that the control device contains a second resistor (96) which is arranged in series with the controlled path of the first transistor (61) in the load circuit of the feeding circuit (4) and a second transistor (92) which is connected to the second resistor (96) with its control path, and that the control connection of the first transistor (61) is connected to the connection, which faces away from the first transistor (61), of the second resistor (96) via the controlled path of the second transistor.

2. Circuit arrangement according to Claim 1, characterized in that the feeding circuit (4) is a constant current source.

3. Circuit arrangement according to Claim 2, characterized in that at least one further constant current source is arranged in the load circuit of the constant current source.

4. Circuit arrangement according to one of Claims 1 to 3, characterized in that a third resistor (93) is connected in series with the control connection of the second transistor (92).

5. Circuit arrangement according to one of Claims 1 to 4, characterized in that a resistor (64) and/or a Z diode (63) is arranged in parallel with the control path of the first transistor (61) and that a fourth resistor (95) is arranged between the controlled path of the second transistor (92) and the second resistor (96).

6. Circuit arrangement according to Claim 5, characterized in that a Z diode (91), which is polarized in the reverse direction for the output current of the associated feeding circuit (4), is arranged in parallel with the series circuit consisting of the controlled path of the first transistor (61), the second resistor (96) and the fourth resistor (95).

7. Circuit arrangement according to one of Claims 1 to 6, characterized by a use in an arrangement with two feeding circuits (4, 5), which can be connected to a load resistor (1) with mutually opposite polarization, and with a connection pair (11, 12), which is in each case connected to the feeding circuits (4, 5) via feeding current paths, for the load resistor (1), and with a device for the optional feeding of the load resistor (1) by means of one or the other feeding circuit (4, 5), in which arrangement switching means (31), which are provided at least in the feeding circuit (4) provided with the electronic switch and the control device, for activating the feeding circuit are arranged outside the output circuit.

8. Circuit arrangement according to Claim 7, characterized in that one feeding circuit (4) is a power feeding current source for power feeding electric loads, located in a power feeding loop (1a), by means of direct-current series feeding and the other feeding circuit (5) is a test voltage source of a device (8, 8a) for testing the resistance of the power feeding loop (1a), an that the feeding circuit (4) forming the power feeding current source can be activated and/or deactivated in dependence on the loop resistance by a device (8, 8a) for testing the loop resistance by means of switching means arranged outside the output circuit.

9. Circuit arrangement according to one of Claims 1 to 8, characterized in that at least one of the feeding circuits (4, 5, 41, 42) contains a diode (50, 410, 420), which is effective at the output and which is polarized in the reverse direction for the internal output voltage.

10. Circuit arrangement according to Claim 8 or 9, characterized in that a current sensing resistor (82) for the test current and a current sensing resistor (81) for the power feeding current are directly connected in series and are arranged in such a manner that the current sensing resistor (82) for the test current is located in a current branch between the power feeding loop (1a) and two current paths leading to the feeding circuits and is bypassed by a diode (83) which is polarized in the forward direction for the power feeding current and that the current sensing resistor (81) for the power feeding current is connected to the output of the feeding circuit (4) forming the power feeding current source and that the current sensing resistors (81, 82) are in each case connected to a comparator (84, 85) and that the outputs of the comparators (84, 85) are connected via an OR gate (86) to a control input (40) of the feeding circuit (4) forming the power feeding current source.

11. Circuit arrangement according to one of Claims 8 to 10, characterized in that the feeding circuits (4, 5; 4a, 5a) forming the power feeding current source and the test voltage source, together with the device (8, 8a) for testing the loop resistance, are accommodated in one and the same constructional unit (F1, F2) and that the output of the feeding circuit (5, 5a) forming the test voltage source, which is connected via one current path to a current sensing resistor (82), is separately brought out via the other current path.

12. Circuit arrangement according to Claim 11, characterized in that the constructional unit (F1) is connected, with a further similar constructional unit (F2), to a power feeding loop (1a) in such a manner that a series circuit of the feeding circuits forming the power feeding current sources is located at the input of the power feeding loop and that one of the feeding circuits (4, 4a) forming the test voltage sources is connected to the power feeding loop (1a).

**Revendications**

1. Montage comportant un circuit d'alimentation pour alimenter une résistance de charge, et dans lequel le ciruit d'alimentation est raccordé par l'intermédiaire d'un interrupteur électronique pouvant être commandé par un dispositif de commande, à un couple de bornes (11, 12) servant au raccordement d'un circuit de charge, et dans lequel l'interrupteur électronique contient, dans une voie du courant d'alimentation reliant le circuit d'alimentation au couple de bornes, la section commandée d'un premier transistor (61), et une borne de commande du premier transistor (61) est raccordée à un potentiel de commande tel que ce premier transistor (61) est conducteur lorsque le circuit d'alimentation (4) est activé et est bloqué lorsque le ciruit d'alimentation (4) est désactivé, et dans lequel la voie anode-cathode d'un thyristor (65) est branchée en parallèle avec la section commandée du premier transistor (61) et l'électrode de commande du thyristor (65) est raccordée par l'intermédiaire d'une première résistance (66) à une électrode principale du thyristor (65) et par l'intermédiaire d'un dipôle non linéaire (67) bloqué pour des tensions inférieures à une tension de seuil et conducteur pour une tension supérieure à une tension de seuil et réalisé à la manière d'une diode Zener, à l'autre électrode principale du thyristor (65) de telle sorte que la première résistance (66) est branchée en parallàle avec la section de commande du thyristor (65), caractérisé par le fait que le dispositif de commande contient une seconde résistance (96) disposée dans le circuit de charge du circuit d'alimentation (4) en série avec la section commandée du premier transistor (61), et un second transistor (92) raccordé par une section de commande à la seconde résistance (96), et que la borne de commande du premier transistor (61) est reliée par l'intermédiaire de la section commandée du second transistor à la borne, située à l'opposé du premier transistor (61), de la seconde résistance (96).

2. Montage suivant la revendication 1, caractérisé par le fait que le ciruit d'alimentation (4) est une source de courant constant.

3. Montage suivant la revendication 2, caractérisé par le fait que dans le circuit de charge de la source de courant constant se trouve disposée au moins une autre source de courant constant.

4. Montage suivant l'une des revendications 1 à 3, caractérisé par le fait qu'une troisième résistance (93) est branchée en amont de la borne de commande du second transistor (92).

5. Montage suivant l'une des revendications 1 à 4, caractérisé par le fait qu'une résistance (64) et/ou une diode Zener (63) est diposée en parallèle avec la section de commande du premier transistor (61) et une quatrième résistance (95) est disposée entre la section commandée du second transistor (92) et la seconde résistance (96).

6. Montage suivant la revendication 5, caractérisé par le fait qu'une diode Zener (91) polarisée en inverse pour le courant de sortie du circuit d'alimentation associé (4), est branchée en série avec le circuit série constitué par la section commandée du premier transistor (61), la seconde résistance (96) et la quatrième résistance (95).

7. Montage suivant l'une des revendications 1 à 6, caractérisé par son application dans un dispositif comportant deux circuits d'alimentation (4, 5) pouvant être raccordés avec des polarités réciproquement opposées à une résistance de charge (1), un couple de bornes (11, 12) prévues pour la résistance de charge (1) et raccordées respectivement par l'intermédiaire de voies du courant d'alimentation aux circuits d'alimentation (4, 5), et un dispositif servant à alimenter au choix la résistance de charge (1) à l'aide de l'un ou de l'autre des circuits d'alimentation (4, 5), et dans lequel au moins dans le circuit d'alimentation (4) équipé de l'interrupteur électronique et du dispositif de commande, des moyens de commutation (31) prévus pour l'activation de ce circuit sont disposés à l'extérieur du circuit d'entrée.

8. Montage suivant la revendication 7, caractérisé par le fait que l'un des circuits d'alimentation (4) est une source de courant d'alimentation à distance servant à réaliser l'alimentation à distance d'appareils d'utilisation électriques situés dans une boucle d'alimentation à distance (1a), au moyen d'une alimentation série en courant continu, et que l'autre circuit d'alimentation (5) est une source de tension de contrôle d'un dispositif (8, 8a) servant à contrôler la résistance de la boucle d'alimentation à distance (1a), et que le circuit d'alimentation (4) constituant la source de courant d'alimentation à distance peut être activé et/ou désactivé à l'aide de moyens de commutation disposés à l'extérieur du circuit de sortie, par un dispositif (8, 8a) servant à contrôler la résistance de boucle, en fonction de cette résistance de boucle.

9. Montage suivant l'une des revendications 1 à 8, caractérisé par le fait qu'au moins l'un des circuits d'alimentation (4, 5, 41, 42) contient und diode (50, 410, 420) qui agit au niveau de la sortie et est polarisée en inverse pour la tension de sortie proprement dite.

10. Montage suivant la revendication 8 ou 9, caractérisé par le fait qu'une résistance (82) de mesure du courant de contrôle et une résistance (81) de mesure du courant d'alimentation à distance sont branchées directement en série et sont disposées de telle sorte que la résistance (82) de mesure du courant de contrôle est située dans une branche disposée entre la boucle d'alimentation à distance (2a) et deux voies de courant aboutissant aux circuits d'alimentation et est shuntée par une diode (83) polarisée dans le sens passant pour le courant d'alimentation à distance, et que la résistance (81) de mesure du courant d'alimentation à distance est raccordée à la sortie du circuit d'alimentation (4) constituant la source de courant d'alimentation à distance, que des comparateurs (84, 85) sont raccordés respectivement aux résistances (80, 82) de mesure du courant et que les sorties du comparateur (84, 85) sont raccordées par l'intermédiaire d'un circuit OU (86) à une entrée de commande (40) du circuit d'alimentation (4) constituant la source du courant d'alimentation à distance.

11. Montage suivant l'une des revendications 8 à 10, caractérisé par le fait que les circuits d'alimentation (4, 5; 4a, 5a) constituant la source du courant d'alimentation à distance et la source de tension de contrôle sont logées, conjointement avec le dispositif (8, 8a) servant à contrôler la résistance de boucle, dans une même unité de construction (F1, F2) et que la sortie du circuit d'alimentation (5, 5a) constituant la source de tension de contrôle, qui est reliée par l'intermédiaire de l'une des voies de courant à une résistance (82) de mesure du courant, est ressortie séparément par l'intermédiaire de l'autre voie de courant.

12. Montage suivant la revendicaion 11, caractérisé par le fait que l'unité de construction (F1) est raccordée, ainsi qu'une autre unité de construction de même type (F2), à une boucle d'alimentation à distance (1a) de telle sorte qu'un circuit série formé par les circuits d'alimentation constituant les sources de courant d'alimentation à distance est présent à l'entrée de la boucle d'alimentation à distance et que l'un des circuits d'alimentation (4, 4a) constituant la source de tension de contrôle est relié à la boucle d'alimentation à distance (1a).

FIG 1

FIG 2

FIG 3

FIG 4

FIG 5

# FIG 6

# FIG 8

# FIG 7